# EUROPÄISCHE PATENTSCHRIFT

(11) **EP 2 670 239 B1**
(45) Veröffentlichungstag und Bekanntmachung des Hinweises auf die Patenterteilung: **12.08.2015**
(21) Anmeldenummer: 12700565.0
(22) Anmeldetag: 19.01.2012
(51) Int. Cl.: A01N 25/02, A01N 43/80, A01N 43/40, A01P 1/00, C09D 5/02

(54) **FORMULIERUNG ZUR ANTIMIKROBIELLEN UND FUNGIZIDEN AUSRÜSTUNG VON POLYMERMATERIALIEN, INSBESONDERE VON LACKEN UND BESCHICHTUNGEN**
FORMULATION FOR THE ANTIMICROBIAL AND FUNGICIDAL TREATMENT OF POLYMERIC MATERIALS, IN PARTICULAR OF PAINTS AND COATINGS
FORMULATION CONFÉRANT UNE FONCTION ANTIBACTÉRIENNE ET FONGICIDE À DES MATÉRIAUX POLYMÈRES, EN PARTICULIER DES LAQUES ET DES REVÊTEMENTS

(30) Priorität: 03.02.2011 EP 11153131
(43) Veröffentlichungstag der Anmeldung: 11.12.2013
(73) Patentinhaber: Sanitized AG, 3400 Burgdorf (CH)
(72) Erfinder: STUTTE, Peter, Dr., CH-3400 Burgdorf (CH); ZELLER, Dietmar, CH-3063 Ittigen (CH)
(74) Vertreter: Jacobi, Markus Alexander
(86) Internationale Anmeldenummer: PCT/EP2012/050762
(87) Internationale Veröffentlichungsnummer: WO 2012/104146

(56) Entgegenhaltungen:
- EP-A2- 1 902 617
- EP-A2- 1 908 349
- JP-A- 11 043 628
- Shell Chemicals: "Hexylene Glycol", , Juli 2001 (2001-07), XP007918878, Gefunden im Internet: URL:http://www.chemical-supermarket.com/fi les/MSDS/Solvents/MSDS,%20Hexylene%20Glyco l.pdf [gefunden am 2011-06-09]

## Beschreibung

Die vorliegende Erfindung betrifft Formulierungen zur antimikrobiellen und fungiziden Ausrüstung von Polymer-Materialien, insbesondere von Lacken und Beschichtungen, insbesondere für Lacke und Beschichtungen basierend auf Polymeren wie Polyurethanen, PVC, Polyestern und Polyacrylaten. Die Erfindung betrifft insbesondere antimikrobielle Formulierungen mit zwei Wirkstoffen als Zusatz zu Polymer-Materialien wie Beschichtungen, die von schädlichen Mikroorganismen befallen werden können. Insbesondere bezieht sich die Erfindung auf eine antimikrobielle Formulierung zum Konservieren von Polyurethan-Lacken bzw. PVC.

Antimikrobielle Formulierungen werden in vielen Bereichen des Alltags eingesetzt, beispielsweise zur Bekämpfung von schädlichen Algen, Pilzen und Bakterien. Diese Formulierungen sind häufig nicht sehr beständig und führen zu Verfärbungen und anderen Beeinträchtigungen bei den Produkten, die konserviert werden sollen.

Zu den bekannten antimikrobiellen Wirkstoffen gehören auch Zink- und NatriumPyrithion, die z. B. aus US 5,562,995 und der US 5,883,154 bekannt sind. US 5,562,995 betrifft das Vermeiden einer Verfärbung in einem wässrigen antimikrobiellen Gemisch, das sowohl Eisen- oder Kupferionen als auch Pyrithion als antimikrobiellen Wirkstoff enthält. US 5,883,154beschreibt das Verhindern von unerwünschten Verfärbungen eines antimikrobiellen Gemisches in einem Harz.

In EP-A 0 676 140 werden Biozid-Zusammensetzungen beschrieben, die 2-n-Octylisothiazolin-3-on (OIT) und Methylisothiazolin-3-on (MIT) enthalten.

Die antimikrobielle Komponente 4,5-Dichlor-2-n-octyl-4-isothiazolin-3-on (DCOIT) ist als Fungizid im Handel erhältlich, beispielsweise als "Rozone TM 2000" von Rohm and Haas Company.

EP-A 0 886 469 beschreibt Belüftungsfilter, die ein Isothiazolon in Kombination mit einem Benzalkoniumhalogenid und einem Glykol enthalten. EP-A 1 468 607 beschreibt Zusammensetzungen, die ein Triazin und ein Pyrithion als Wirkstoffe kombinieren.

WO 2002/15693 beschreibt synergistische Biozid-Zusammensetzungen, die 2-n-Octylisothiazolin-3-on und Zinkpyrithion enthalten.

Aus JP-A 11 043628 (Pentel KK) sind wässrige Zusammensetzungen bekannt, die ein Benzisothiazolinon und Natrium-2-pyridinthiol-1-oxid enthalten können.

Aus EP-A 1 902 617 sind Konservierungsmittel bekannt, die ein Benzisothiazolinon und 2-mercaptopyridin-N-oxid, eine Base und einen aromatischen Alkohol enthalten. Aus der EP-A 1 908 349 sind weitere Konservierungsmittel bekannt, die ein Benzisothiazolinon und 2-Mercaptopyridin-N-oxid sowie eine alkalische Komponente enthalten.

Die bekannten antimikrobiellen Formulierungen, welche die vorgenannten bioziden bzw. antimikrobiellen Wirkstoffe enthalten, sind für verschiedene Anwendungszwecke noch nicht befriedigend. Dies gilt insbesondere bei einem Einsatz als Konservierungsmittel für die biozide bzw. antimikrobielle Ausrüstung von Lacken und Beschichtungen, deren Oberflächen häufig auch von Algen oder Pilzen befallen werden. Ein Algen- und/oder Pilzbefall macht die Oberflächen nicht nur optisch unansehnlich sondern führt auch zur Materialschädigung und zur Verkürzung der Gebrauchsdauer der entsprechenden Oberflächen. Der mikrobielle Befall von Beschichtungen tritt vor allem an Stellen mit hoher Feuchtigkeit auf, sowohl im Innenbereich, z. B. in Gebäuden von Molkereien oder Brauereien, als auch im Außenbereich, z. B. an Stellen, die ungünstigen Witterungsbedingungen ausgesetzt sind.

Wichtig für den Einsatz ist es auch, dass die antimikrobiellen Formulierungen selbst über einen längeren Zeitraum (zum Beispiel mehr als 3, vorzugsweise mehr als 6 Monate) stabil sind und nicht zu Niederschlägen, Eintrübungen und/oder Verfärbungen führen. Oftmals ist eine Stabilität über mehr als 12 Monate wünschenswert.

Beschichtungen und Lacke, die Isothiazolinone und/oder Pyrithione enthalten, sind häufig gegen Besiedelung durch beispielsweise Alternaria-Arten oder andere Pilze zu wenig beständig. Der mikrobielle Bewuchs führt zu einer optischen Beeinträchtigung der Beschichtungen und häufig zu einer Verfärbung. Verschiedene biozide Wirkstoffe führen in den üblichen Dosierungen unter der Einwirkung von UV-Strahlung zu Verfärbungen.

Eine Aufgabe ist es, mit einer speziellen Formulierung von zwei antimikrobiellen Wirkstoffen und einem speziellen Lösungsmittels, nämlich Hexylenglykol, eine möglichst starke, lang-andauernde antimikrobielle Wirkung zu erzielen, nur relativ kleine Mengen der beiden (oder mehreren) Wirkstoffe einsetzen zu müssen und dennoch ein hohes Maß an Stabilität der Formulierung zu erreichen.

Das Lösungsmittel Hexylenglykol (HG), auch 2-Methyl-2,4-pentan-diol genannt, ist seit vielen Jahren als mit Wasser mischbare Flüssigkeit bekannt, die z. B. in kosmetischen Zusammensetzung eingesetzt werden kann, siehe z. B. H. Fiedlers "Lexikon der Hilfsstoffe für Pharmazie, Kosmetik und angrenzende Gebiete" (Editio Cantor Verlag 2002, S. 854). Hexylenglykol hat folgende Formel (HG):

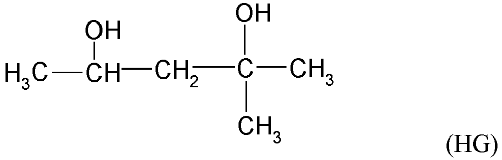

Hexylenglykol ist, wie auch zahlreiche andere Alkohole, als gutes Lösungsmittel für diverse Anwendungen bekannt, (siehe z. B. Datenblatt von Shell Chemicals aus 2001 zu: "Hexylene Glycol").

Die genannten Aufgaben werden gelöst durch eine Formulierung, insbesondere zur antimikrobiellen Ausrüstung von Polymermaterialien wie Lacken oder Beschichtungen, die als antimikrobielle Wirkstoffe zum einen Natriumpyrithion (NaPT) und zum anderen 1,2-Benzisothiazolin-3-on (BIT), sowie als zusätzliche Komponente Hexylenglykol (HG) sowie ggf. ein (oder mehrere) weitere Lösungsmittel (L) enthält.

Oftmals enthält die Formulierung nur genau diese zwei antimikrobiellen Wirkstoffe, nämlich Natriumpyrithion (NaPT) und 1,2-Benzisothiazolin-3-on (BIT), sowie die Komponente Hexylenglykol (HG).

Die Komponente Natriumpyrithion (NaPT) hat folgende chemische Struktur:

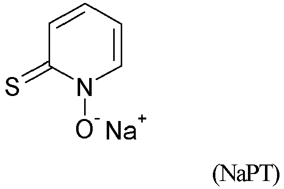

Die Komponente 1,2-Benzisothiazolin-3-on (BIT) hat folgende chemische Struktur:

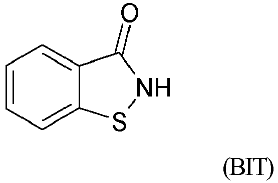

Die Erfindung betrifft auch eine (vorzugsweise flüssige) Formulierung, die als antimikrobielle Wirkstoffe nur Natriumpyrithion (NaPT) und 1,2-Benzisothiazolin-3-on (BIT) sowie als zusätzliche Komponente Hexylenglykol (HG) sowie als Lösungsmittel (L) Wasser enthält.

Die Erfindung betrifft insbesondere synergistische Formulierungen der Komponenten.

Die Erfindung betrifft auch eine Formulierung, die das Natriumpyrithion (NaPT) in einer Menge von 1 bis 30 Gew.-%, insbesondere 5 bis 20 Gew.-%, bezogen auf die gesamte Formulierung, enthält. Das Natriumpyrithion (NaPT) wird oftmals in Form einer 40-%igen wässrigen Lösung eingesetzt.

Die Erfindung betrifft auch eine Formulierung, die das 1,2-Benzisothiazolin-3-on (BIT) in einer Konzentration von 1 bis 30 Gew.-%, insbesondere 5 bis 20 Gew.-%, bevorzugt auch 6 bis 15 Gew.-%, bezogen auf die gesamte Formulierung, enthält.

Die Erfindung betrifft auch eine Formulierung, die das Natriumpyrithion (NaPT) einerseits und das 1,2-Benzisothiazolin-3-on (BIT) andererseits in einem (insbesondere synergistischen) Gewichtsverhältnis im Bereich von 1 zu 10 bis 10 zu 1, insbesondere von 1 zu 5 bis 5 zu 1 enthält. Häufig werden NaPT und BIT im Gewichtsverhältnis von 1 zu 2 bis 2 zu 1 eingesetzt. Die eingesetzte Menge an 1,2-Benzisothiazolin-3-on (BIT) in der Formulierung ist oftmals größer als die Menge an Natriumpyrithion (NaPT), z. B. von 5 zu 1 bis 1,2 zu 1. Die Erfindung betrifft auch eine Formulierung, die das Hexylenglykol (HG) in einer Konzentration von 20 bis 80 Gew.-%, insbesondere 30 bis 70 Gew.-%, bezogen auf die gesamte Formulierung, enthält.

Die Erfindung betrifft auch eine Formulierung, die die beiden genannten antimikrobiellen Komponenten in einer Gesamtkonzentration von 2 bis 30 Gew.-%, insbesondere 5 bis 25 Gew.-%, bezogen auf die gesamte Formulierung enthält. Sie enthält oftmals das Hexylenglykol (HG) in einer Konzentration von 30 bis 70 Gew.-%, bezogen auf die gesamte Formulierung. Vorzugsweise ist das Hexylenglykol das einzige organische Lösungsmittel in der Formulierung. Die Menge an eingesetztem HG ist oftmals 3 bis 20 mal größer, insbesondere 5 bis 12 mal größer als die Gesamtmenge NaPT und BIT.

Die Erfindung betrifft auch eine Formulierung, die 10 bis 80 Gew.-%, insbesondere 10 bis 60 Gew.-%, oftmals 10 bis 30 Gew.-% bezogen auf die gesamte Formulierung, mindestens eines weiteren Lösungsmittels (L), insbesondere Wasser, enthält.

Die Erfindung betrifft auch eine Formulierung, die 0,5 bis 10 Gew.-%, bezogen auf die gesamte Formulierung, an weiteren Zusatzstoffen, z. B. in Form von Verdickungsmitteln, Entschäumungs-Mitteln, pH-Wert-Regulatoren, Dispergier-Hilfsmitteln und/oder Stabilisatoren enthält.

Ein weiterer Gegenstand der Erfindung ist ein Verfahren zur Herstellung einer antimikrobiellen Formulierung wie oben beschrieben, bei dem man die antimikrobiellen Wirkstoffe Natriumpyrithion (NaPT) und 1,2-Benzisothiazolin-3-on (BIT), sowie das Hexylenglykol (HG) und ggf. die weiteren Komponenten vermischt. Die Herstellung kann beispielsweise dadurch erfolgen, dass man Hexylenglykol vorlegt und dann die beiden Komponenten BIT und NaPT zufügt, gegebenenfalls unter Erwärmung auf z. B. 30° bis 80 °C. Gegenstand ist auch die Verwendung einer antimikrobiellen Formulierung zur Bekämpfung von schädlichen Mikroorganismen in Beschichtungen und Lacken.

Die Erfindung betrifft auch die Verwendung, wobei die antimikrobielle Formulierung zum Konservieren von Polymermaterialien, insbesondere von Beschichtungen und Lacken aus Polyurethanen, PVC, Polyestern und/oder Polyacrylaten, insbesondere aus Polyurethanen oder PVC, eingesetzt wird.

Ein weiterer Gegenstand der Erfindung sind die gegen schädliche Mikroorganismen konservierten Polymermaterialien, insbesondere Beschichtungsmassen und Lacke, gekennzeichnet durch einen Gehalt an einer antimikrobiellen Formulierung wie oben beschrieben. Von Interesse sind auch die gegen schädliche Mikroorganismen konservierte Beschichtungsmassen und Lacke, die auf Polyurethanen, PVC, Polyestern und/oder Polyacrylaten, basieren und die 0,05 bis 10 Gew.-% der antimikrobiellen Formulierung, insbesondere 0,1 bis 3 Gew.-%, bezogen auf die gesamte Beschichtungsmasse bzw. den Lack enthalten.

Die Erfindung ist auch gerichtet auf die gegen schädliche Mikroorganismen konservierten Polymermaterialien, insbesondere Beschichtungsmassen und Lacke, die auf Polyurethanen oder PVC, basieren und die von 0,1 bis 3 Gew.-% der antimikrobiellen Formulierung, bezogen auf die gesamte Beschichtungsmasse bzw. den Lack enthalten.

Als weitere Lösungsmittel für die antimikrobiellen Formulierungen können insbesondere Wasser, aber auch andere organische Substanzen eingesetzt werden. Polare organische Lösungsmittel sind z. B. Alkohole (wie Ethanol oder Propanol), Ester, Ethylenglykol, Glykolether und Glykolester. Unpolare organische Lösungsmittel sind z. B. Aromaten, wie Alkylbenzole (wie Xylol und Toluol), Paraffine, unpolare Ester (wie Phthalate und Fettsäureester), epoxidierte Fettsäuren sowie Siliconöle. Häufig werden auch Mischungen von Lösungsmitteln eingesetzt.

Die beschriebenen Formulierungen zeichnen sich auch dadurch aus, dass es sich um klare Lösungen handelt. Dies gilt insbesondere bei den üblichen Einsatztemperaturen. Die Unterschiede der Begriffe Lösung und Dispersion sind dem Fachmann z.B. aus Römpp Chemie-Lexikon geläufig.

Dadurch, dass es sich um eine klare Lösung handelt, ist das System im Gegensatz zu den üblicherweise eingesetzten Dispersionen kompatibel mit zahlreichen Polymer-Materialien, wie Beschichtungsmassen, z. B. weich-PVC, PU-, Polyester- und Acrylat-basierten Lacken und Beschichtungsmassen. Die Formulierungen sind zudem über viele Monate nur hinweg lagerstabil und kompatibel mit den genannten Einsatzbereichen.

Die Kombination der beiden Wirkstoffe in dem genannten Lösungsmittelsystem ermöglicht es überraschenderweise, die aktiven Komponenten auch in größeren Konzentrationen homogen und klar zu lösen. Dies gelingt in zahlreichen anderen Medien nicht.

Dies ist u. a. deshalb wichtig, da in der industriellen Anwendung vorzugsweise stabile hochkonzentrierte und klare Lösungen eingesetzt werden sollen, die kompatibel mit den Beschichtungssystemen sind.

Die Formulierungen weisen auch eine sehr hohe Temperaturbeständigkeit auf (bis 200° C) und können in die genannten Systeme auch bei hohen Temperaturen eingearbeitet werden, ohne dass eine unerwünschte Verfärbung oder Eintrübung der Beschichtung auftritt. Dies ist beispielsweise beim Einsatz von Zinkpyrithion in den Formulierungen nicht möglich. Überraschend war auch, dass das Natriumpyrithion (NaPT), welches vorzugsweise als wässrige 40%ige Lösung eingesetzt werden kann, in Verbindung mit BIT in Hexylenglykol als Lösungsmittel mit den genannten Polymer-Systemen kompatibel ist, und zudem noch positiven Eigenschaften hinsichtlich Trübung und Verfärbung aufweist. Beim Einsatz anderer Glykole konnten vergleichbare Resultate nicht erreicht werden.

Die erfindungsgemäße Formulierung kann zusätzlich zu NaPT und BIT im Prinzip auch einen oder mehrere andere antimikrobielle Wirkstoffe enthalten, die in Abhängigkeit vom speziellen zu konservierenden System ausgewählt werden. Eine typische Einsatzmenge für den zusätzlichen antimikrobiellen Wirkstoff ist beispielsweise 0 bis 5 Gew.-%, insbesondere 0,1 bis 5 Gew.-% (bezogen auf die gesamte Formulierung).

Beispiele für solche anderen Wirkstoffe sind nachfolgend angegeben:
*Triazole, wie Amitrol, Azocyclotin, BAS 480F, Bitertanol, Difenoconazol, Fenbuconazol, Fenchlorazol, Fenethanil, Fluquinconazol, Flusilazol, Flutriafol, Imibenconazol, Isozofos, Myclobutanil, Metconazol, Epoxyconazol*, *Paclobutrazol, Penconazol, Propioconazol, (+*/*-)-cis-1-(4-Chlorphenyl)-2-(1H-1,2,4- triazol-1-yl)-cycloheptanol, Tetraconazol, Triadimefon, Triadimenol, Triapenthenol, Triflumizol, Triconazol und Uniconazol sowie die Metallsalze und Säureaddukte dieser Triazole;*
*Imidazole, wie Imazalil, Pefurazoat, Prochloraz, Triflumizol und 2-(1-t-Butyl)-1-(2-chlorphenyl)-3-(1,2,4-triazol-1-yl)-propan-2-ol sowie die Metallsalze und Säureaddukte dieser Imidazole; Thiazolcarboxanilide, wie 2',6'-Dibrom-2-methyl-4-trifluormethoxy-4'-trifluormethyl-1,3-thiazol-5-carboxanilide, und die Metallsalze und Säureaddukte dieser Thiazolcarboxanilide;*
*Methyl-(E)-2- 2-[6-(2-cyanophenoxy)-pyrimidin-4-yloxy]-phenyl- 3-methoxyacrylat, Methyl-(E)-2-2-[6-(2-thioamidophexoxy)-pyrimidin-4-yloxy]-phenyl-3-methoxyacrylat, Methyl-(E)-2- 2-[6-(2-fluorphenoxy)-pyrimidin-4-yloxy]-phenyl-3-methoxyacrylat, Methyl-(E)-2- 2-(6-(2,6-difluorphenoxy)-pyrimidin-4-yloxy]-phenyl-3-methoxyacrylat, Methyl-(E)-2- 2-[3-(pyrimidin-2-yloxy)-phenoxyl-phenyl-3-methoxyacrylat, Methyl-(E)-2- 2-[3-(5-methylpyrimidin-2-yloxy)-phenoxy]-phenyl-3-methoxyacrylat, Methyl-(E)-2-2-[3-(phenylsulfonyloxy)-phenoxy-]-phenyl-3-methoxyacrylat, Methyl-(E)-2- 2-(3-(4-nitrophenoxy)-phenoxy]-phenyl-3-methoxyacrylat, Methyl-(E)-2-(2-phenoxyphenyl)-3-methoxyacrylat, Methyl-(E)-2-[2-(3,5-dimethylbenzoyl)-pyrrol-1-yl]-3-methoxyacrylat, Methyl-(E)-2-[2-(3-methoxyphenoxy)-phenyl]-3-methoxyacrylat, Methyl-(E)-2-[2-(2-phenylethen-1-yl)-phenyl]-3- methoxyacrylat, Methyl-(E)-2-[2-(3,5-dichlorphenoxy)-pyridin-3-yl]-3-methoxyacrylat, Methyl-(E)-2- 2-[3-(1,1,2,2-tetrafluorethoxy)-phenoxy]-phenyl-3-methoxyacrylat, Methyl-(E)-2- 2-[3-alpha -hydroxybenzyl)-phenoxy]-phenyl-3-methoxyacrylat, Methyl- (E)-2-[2-(4-phenoxypyriden-2-yloxy)-phenyl] -3-methoxyacrylat, Methyl-(E)-2-[2-(3-n-propyloxyphenoxy)-phenyl]-3-methoxyacrylat, Methyl-(E)-2-[2-(3-isopropyloxyphenoxy)-phenyl]-3-methoxyacrylat, Methyl-(E)-2- 2-[3-(2-fluorphenoxy)-phenoxy]-phenyl-3-methoxyacrylat, Methyl-(E)-2-[2-(3-ethoxyphenoxy)-phenyl]-3-methoxyacrylat, Methyl-(E)-2-[2-(4-t-butylpyridin-2-yloxy)-phenyl]-3-methoxyacrylat, Methyl-(E)-2- 2-[3-(3-cyanophenoxy)-phenoxy]-phenyl-3-methoxyacrylat, Methyl-(E)-2-[2-(3-methylpyridin-2-yloxymethyl)-phenyl]-3-methoxyacrylat, Methyl-(E)-2- 2-[6-(2-methylphenoxy)-pyrimidin-4-yloxy]-phenyl-3-methoxyacrylat, Methyl-(E)-2-[2-(5-brompyridin-2-yloxymethyl)-phenyl]-3-methoxyacrylat, Methyl-(E)-2- 2-[3-(3-iodpyridin-2-yloxy)-phenoxy]-phenyl-3-methoxyacrylat, Methyl-(E)-2- 2-[6-(2-chlorpyridin-3-yloxy)-pyrimidin-4-yloxy]-phenyl-3-methoxyacrylat, (E),(E)-Methyl-2-[2-(5,6-dimethylpyrazin-2-ylmethyloximinomethyl)-phenyl]-3-methoxyacrylat, (E)-Methyl-2- 2-[6-(6-methylpyridin-2-yloxy)-pyrimidin-4-yloxy]-phenyl)-3-methoxyacrylat, (E), (E)-Methyl-2-2-[(3-methoxyphenyl)-methyloximinomethyl]-phenyl-3-methoxyacrylat, (E)-Methyl-2- 2-[6-(2-azidophenoxy)-pyrimidin-4-yloxy]-phenyl-3-methoxyacrylat, (E), (E)-Methyl-2-2-[6-(phenylpyrimidin-4-yl)-methyloximinomethyl]-phenyl-3-methoxyacrylat, (E),(E)-Methyl-2-2-[(4-chlorphenyl)-methyloximinomethyl]-phenyl-3-methoxyacrylat, (E)-Methyl-2-2-[6-(2-n-propylphenoxy)-1,3,5-triazin-4-yloxy]-phenyl-3-methoxyacrylat, (E), (E)-Methyl-2-2-[(3-nitrophenyl)-methyloximinomethyl]-phenyl-3-methoxyacrylat;*
*Succinatdehydrogenaseinhibitoren, wie Fenfuram, Furcarbonil, Cyclafluramid, Furmecyclox, Seedvax, Metsulfovax, Pyrocarbolid, Oxycarboxin, Shirlan, Mebenil (Mepronil), Benodanil und Flutolanil (Moncut);*
*Naphthalinderivate, wie Terbinafin, Naftifin, Butenafin, 3- Chlor-7-(2-aza-2,7,7-trimethyloct-3-en-5-in);*
*Sulfenamide, wie Dichlofluanid, Tolyfluanid, Folpet und Fluorfolpet; Captan, Captofol;*
*Benzimidazole, wie Carbendazim, Benomyl, Furathiocarb, Fuberidazol, Thiophonatmethyl und Thiabendazol sowie Salze hiervon;*
*Morpholinderivate, wie Tridemorph, Fenpropimorph, Falimorph, Dimethomorph, Dodemorph, Aldimorph und Fenpropidin sowie Salze hiervon mit Arylsulfonsäuren, z. B. mit p-Toluolsulfonsäure und p-Dodecylphenylsulfonsäure;*
*Dithiocarbamate, Cufraneb, Ferbam, Mancopper, Mancozeb, Maneb, Metam, Metiram, Thiramzeneb, Ziram;*
*Benzothiazole, wie 2-Mercaptobenzothiazole;*
*Benzamide, wie 2,6-Dichlor-N-(4-trifluormethylbenzyl)-benzamide;*
*Borverbindungen, wie Borsäure, Borsäureester und Borax;*
*Formaldehyd und Formaldehyddonorverbindungen, wie Benzylalkoholmono-(poly)-hemiformal, Oxazolidine, Hexahydro-S-triazine, N-Methylolchloracetamid, Paraformadehyd, Nitropyrin, Oxolinsäure, Tecloftalam;*
*Biguanide, wie Polyhexamethylenbiguanid;*
*Tris-N-(cyclohexyldiazeniumdioxy)-aluminium, N-(Cyclohexyldiazeniumdioxy)-tributylzinn und Kaliumsalze hiervon, Bis-N-(cyclohexyldiazeniumdioxy)-kupfer;*
*Aldehyde, wie Zimtaldehyd, Glutaraldehyd und beta -Bromzimtaldehyd,*
*Thiocyanate, wie Thiocyanatomethylthiobenzothiazol und Methylenbisthiocyanat;*
*quartäre Ammoniumverbindungen, wie Benzyldimethyltetradecylammoniumchlorid,*
*Benzyldimethyldodecylammoniumchlorid und Di- decyldimethylammoniumchlorid;*
*Iodderivative, wie Diiodmethyl-p-tolylsulfon, 3-Iod-2-propinylalkohol, 4-Chlorphenyl-3-iodpropargylformal, 3-Brom-2, 3-diiod- 2-propenylethylcarbamat, 2,3,3-Triiodallylalkohol, 3-Brom-2,3-diiod-2-propenylalkohol;*
*Phenolderivative, wie Tribromphenol, Tetrachlorphenol, 3-Methyl-4-chlorphenol, 3,5-Dimethyl-4-chlorphenol, Phenoxyethanol, Dichlorphen, o-Phenylphenol, m-Phenylphenol, p-Phenylphenol und*
*2-Benzyl-4-chlorphenol sowie die Alkali- und Erdalkalimetallsalze dieser Phenolderivate;*
*Microbizide mit einem aktivierten Halogenatom, wie Chloracetamide, Bronopol und Bronidox;*
*Tectamere, wie 2-Brom-2-nitro-1,3-propandiol, 2 Brom-4'-hydroxyacetophenon, 2,2-Dibrom-3-nitrilpropionamid, 1,2-Dibrom-2,4-dicyanobutan und beta -Brom- beta -nitrostyrol;*
*Tetrachlor-4-methylsulfonylpyridin, Pyrimethanol, Mepanipyrim, Dipyrithion;*
*Metallseifen, wie Zinn-, Kupfer- und Zinknaphthenat, -octoat, - 2-ethylhexanoat, -oleat, -phosphat und -benzoat;*
*Metallsalze, wie Kupferhydroxycarbonat, Natriumdichromat, Kaliumdichromat, Kaliumchromat,*
*Kupfersulfat, Kupferchlorid, Kupferborat, Zinkfluorsilicat, Kupferfluorsilicat;*
*Oxide, wie Tributylzinnoxid, Cu₂O, CuO, ZnO;*
*Dialkyldithiocarbamate, wie Natrium- und Zinksalze von Dialkyldithiocarbamaten, Tetramethylthiuramdisulfid und Kalium-N-methyldithiocarbamat;*
*Nitrile, wie 2,4,5,6-Tetrachlorisophthalodinitril, Dinatriumcyanodithioimidocarbamat;*
*Chinoline, wie 8-Hydroxychinoline und seine Kupfersalze;*
*Mucochlorsäure, 5-Hyroxy-2-(5H)-furanon;*
*4,5-Dichlordithiazolinon, 4,5-Benzodithiazolinon, 4,5-Trimethylendithiazolinon;*
*4,5-Dichlor-(3H)-1,2-dithiol-3-on, 3,5-Dimethyltetrahydro-1,3,5-thiadiazin-2-thion, N-(2-p-Chlorbenzoylethyl)-hexaminiumchlorid, Kalium-N-hydroxymethyl-Nmethylthiocarbamat,*
*2-Oxo-2-(4-hydroxyphenyl)-acethydroximinsäurechlorid;*
*Phenyl-(2-chlorcyanovinyl)-sulfon, Phenyl-1,2-dichlor-2-cyanovinylsulfon;*
*silber-, zink- oder kupferhaltige Zeolithe, allein oder eingeschlossen in polymeren aktiven Bestandteilen;*
*Algicide, wie Kupfersulfat, Dichlorophen, Endothal, Fentinacetat und Chinoclamin;*
*Herbizide, wie Acetochlor, Acifluorfen, Aclonifen, Acrolein, Alachlor, Alloxydim, Ametryn,*
*Amidosulfuron, Amitrol, Ammoniumsulfat, Anilofos, Asulam, Atrazin, Aziprotryn, Benazolin,*
*Benfluralin, Benfuresat, Bensulfuron, Bensulid, Bentazon, Chloridazon, Chlorimuron,*
*Chlormethoxyfen, Chlornitrofen, Chloressigsäure, Chlorpikrin, Chlortoluron, Chlorxuron,*
*Chlorprepham, Chlorsulfuron, Chlorthal, Chlorthiamid, Cinmethylin, Cinofulfuron, Clethodim,*
*Clomazon, Clomeprop, Clopyralid, Cyanamid, Cyanazin, Cycloat, Cycloxydim, Benzofencap,*
*Benzthiazuron, Bifenox, Bilanafos, Borax, Bromacil, Brombutid, Bromfenoxim, Bromxynil,*
*Butachlor, Butamifos, Butanachlor, Butralin, Butylat, Carbetamid, Chloramben, Chlorbromuron,*
*Chlorbufam, Chlorflurenol, Difenoxuron, Difenzoquat, Diflufenican, Dimefuron, Dimepiperat,*
*Dimethachlor, Dimethametryn, Dimethipin, Dimethylarsinsäure, Dinitramin, Dinosebacetat,*
*Dinoseb, Dinoterb, Diphenamid, Dipropetryn, Diquat, Dithiopyr, Diuron, Daimuron, Dalapon,*
*Dazomet, Desmedipham, Desmetryn, Dicamba, Dichlobenil, Dichlorprop, Dichlorprop-P,*
*Diclofop, Diethatyl, Flamprop-M, Flazasulfuron, Fluazifop, Fluazifop-P, Fluchloralin,*
*Flumeturon, Fluorglycofen, Fluornitrofen, Flupropanat, Flurenol, Fluridon, Flurochloridon,*
*Fluroxypyr, Fomosafen, Fusamin, Furyloxyfen, Glufosinat, Glyphosat, Haloxyfop, Hexazinon,*
*Imazamethabenz, Imazapyr, Imazaquin, Imazethapyr, Ioxynil, Isopropalin, Isoproturon, Isouron,*
*Isoxaben, Isoxapyrifop, Lactofen, Lenacil, Linuron, MCPA, Pebulat, Pendimethalin,*
*Pentachlorphenol, Pentanochlor, Phenmedipham, Picloram, Piperophos, Pretilachlor,*
*Primisulfuron, Prodiamin, Proglinazin, Prometon, Prometryn, Propachlor, Propanil,*
*Propaquizafop, Propazin, Propham, Propyzamid, Prosulfocarb, Pyrazolynat, Pyrazosulfuron,*
*Pyrazoxyfen, Pyributicarb, Pyridat, Quinclorac, Quinmerac, Quinoclamin, Quizalofop,*
*Quizalofop-P, Eglinazin, Endothal, Epsorcarb, Ethalfluralin, Ethidimuron, Ethofumesat,*
*Fenoxaprop, Fenoxaprop-P, Fenuron, Flamprop, Irgarol 1051, MCPA-thioethyl, Mecoprop,*
*Mecoprop-P, Mefenacet, Mefluidid, Metam, Metamitron, Metazachlor, Methabenzthiazuron,*
*Methazol, Methoprotryn, Methyldymron, Methylisothiocyanat, Metobromuron, Metolachlor,*
*Metoxuron, Metribzin, Metsulfuron, Molinat, Monoalid, Monolinuron, Naproanilid, Napropamid,*
*Naptalam, Neburon, Nicosulfuron, Nipyraclofen, Norflurazon, Orbencarb, Oryzalin, Oxadiazon,*
*Oxyfluorfen, Paraquat, Prometryn, Simetryn, Sulfometuron, Tebutam, Tebuthiuron, Terbacil, Terbumeton, Terbuthylazin, Terbutryn, Thiazafluron, Thifensulfuron, Thiobencarb, Thiocarbazil, Tioclorim, Tralkoxydim, Triallat, Triasulfuron, Tribenzuron, Triclopyr, Tridiphan, Trietazin, Trifluralin und Vernolat.*

Zur Anwendung gelangt jedoch vorzugsweise eine Formulierung, die außer den beiden bioziden Wirkstoffen NaPT und BIT keinen der in der Liste genannten Wirkstoffe enthält.

Die beschriebenen Formulierungen dienen insbesondere zur antimikrobiellen Ausrüstung von:
- PVC vorzugsweise Weich-PVC
- Polyurethan-Lacke und Beschichtungen, wie UV-härtende PU-Lacke und Beschichtungen, 2-Komponenten PU-Lacke und Beschichtungen, lösungsmittelbasierte PU-Lacke und Beschichtungen
- Polyurethan-Schäume
- Polyesterharze, z.B. für Laminate
- Acrylatbeschichtungen und Acrylat-Lacksysteme.

Viele der Formulierungen sind auch dadurch gekennzeichnet, dass ihre Komponenten in den vorgenannten Polymer-Materialien, insbesondere technischen Beschichtungen und Lacken, synergistisch zusammenwirken. Sie können in geringeren Konzentrationen als im Falle der Einzelkomponenten zum Schutz gegen Befall und Zerstörung durch Mikroorganismen verwendet werden.

Vorzugsweise soll die Formulierung gegen Bakterien, Pilze und Algen wirksam sein, insbesondere gegen Schimmelpilze, Hefen, holzzerstörende und holzverfärbende Pilze sowie Algen, ferner im Antifouling-Bereich gegen Organismen wie Balus, Ascidia, Serpula, Mytilus, Spirorbis, Bugula und Hydrazoa.

Dabei kann die Formulierung eine Wirksamkeit auch gegenüber Alternaria-Species und andere Pilze aufweisen.

Beispiele für Mikroorganismen, die Beschichtungsmassen der vorgenannten Art besiedeln, sind Vertreter der folgenden Gattungen:
Alternaria, wie Alternaria alternata,
Aspergillus, wie Aspergillus niger,
Aureobasidium, wie Aureobasidium pullulans,
Chaetomium, wie Chaetomium globosum,
Coniophora, wie Coniophora puteana,
Cladosporium, wie Cladosporium cladosporoides,
Candida, wie Candida albicans,
Lentinus, wie Lentinus tigrinus,
Penicillium, wie Penicillium funiculosum,
Rhodotorula, wie Rhodotorula rubra,
Sclerophoma, wie Sclerophoma pityophila,
Trichoderma, wie Trichoderma viride,
Ulocladium, wie Ulocladium atrum,
Escherichia, wie Escherichia coli,
Pseudomonas, wie Pseudomonas aeruginosa,
Staphylococcus, wie Staphylococcus aureus.

Die erfindungsgemäßen Formulierungen, die sich insbesondere als Konservierungsmittel für polymere Beschichtungen eignen, weisen auch folgende positive Eigenschaften auf:
a) gute bakterizide Wirkung
b) gute algizide Wirkung
c) gute fungizide Wirkung
d) gute Wirksamkeit gegen Alternaria-Spezies
e) gute Beständigkeit auch bei hoher Auswaschbelastung
f) hohe Beständigkeit bei Belastung durch UV-Licht und/oder Wärme
g) antimikrobielle Langzeitwirkung trotz geringer Konzentration
h) geringe Toxizität gegenüber Säugetieren
i) niedriger Dampfdruck der Wirkstoffe
j) günstiges Verhältnis von Preis und Leistung.

Die genannten Polymer-Materialien, insbesondere Beschichtungen und Lacke, werden insbesondere dann dauerhaft antibakteriell und fungizid ausgerüstet, wenn die Einsatzkonzentration der Formulierung in den Polymermaterialien bzw. Beschichtungsmasse von 0,01 bis 10 Gew.-%, vorzugsweise 0,05 bis 5, oftmals von 0,1 bis 2 Gew.-% beträgt. Die mit den erfindungsgemäßen Formulierungen ausgerüsteten Polymermaterialien, insbesondere Beschichtungen und Lacke, enthalten oftmals auch 0 bis 3 Gew.-%, insbesondere 0,1 bis 2 Gew.-% an handelsüblichen Stabilisatoren, wie z. B. Sanduvor VSU (Stabilisator, Clariant) oder Hostavin N24 (Stabilisator, Clariant). Sie enthalten ggf. auch Weichmacher und/oder 0 bis 3 Gew.-% eines Katalysators, z. B. Bärostab UBZ 660-1 (Sn-organischer Katalysator, Bodo-Möller Chemie).

Die Erfindung wird durch die nachfolgenden Beispiele und Ansprüche näher erläutert:

### Beispiel 1 (Herstellung einer antimikrobiellen Formulierung)

600 g Hexylenglykol wurden vorgelegt und auf 50° C erhitzt. Dazu wurden unter stetigem Rühren nacheinander wässrige Natriumpyrithionlösung (100 g NaPT in 250 g Wasser) und 50 g handelsübliches 1,2-Benzisothiazolin-3-on (BIT) zugegeben und solange weiter gerührt bis eine klare, leicht gelbliche Lösung entstanden ist. Diese Formulierung bleibt auch nach dem Abkühlen auf Raumtemperatur für einen langen Zeitraum homogen und stabil.

### Beispiel 2 (Herstellung einer antimikrobiell ausgerüsteten PVC-Beschichtungsmasse)

4 g der in Beispiel 1 hergestellten, antibakteriellen Formulierung wurden in 996 g einer handelsüblichen Beschichtungsmasse (weich-PVC-Dispersion) eingerührt.

Die eingesetzte PVC-Dispersion enthielt dabei:
60 Gewichtsteile Vinnolit P4472 (Polyvinylchlorid der Vinnolit GmbH)
40 Gewichtsteile DINCH (Cyclohexandicarbonsäureester, Weichmacher, BASF)
0,6 Gewichtsteile Sanduvor VSU (Stabilisator, Clariant)
0,4 Gewichtsteile Hostavin N24 (Stabilisator, Clariant)
2 Gewichtsteile Bärostab UBZ 660-1 (Sn-organischer Katalysator, Bodo-Möller Chemie).

Die Zusammensetzung wurde dann bei 190° C für 90 Sekunden geliert. Man erhielt eine farblose transparente Beschichtungsmasse. Diese kann auf unterschiedlichen Trägern aufgebracht werden. Die erhaltene PVC-Beschichtung ergab eine Keimreduktion von 3,9 log-Einheiten gemäß einem Test nach Norm JIS Z 2801 (Staphylococcus aureus) und eine sehr gute Schimmelpilzresistenz (Note 0 - kein Schimmel feststellbar), siehe Norm EN ISO 846.

### Beispiel 3 (Herstellung einer antimikrobiell ausgerüsteten Polyurethan-Beschichtungsmasse)

Es wurden 5 g der in Beispiel 1 genannten Formulierung zu 995 g einer PU-Formulierung (Impranil ELH-A/1 Lösung; Produkt von Bayer MaterialScience) zugemischt und durch Rühren homogen verteilt. Nach dem Auftragen wird die Beschichtung nach Herstellervorschrift 8 bis 10 h trocknen gelassen.

Die Beschichtung wird bei 160° C für 60 Sekunden ausgehärtet. Man erhält eine farblose transparente Beschichtung. Die erhaltene PU-Schicht ergab eine Keimreduktion von 4,7 log-Einheiten gemäss Test JIS Z 2801 (Staphylococcus aureus) und eine sehr gute Schimmelpilzresistenz (Note 0 - kein Schimmel feststellbar), siehe Norm EN ISO 846. Eine Übersicht über die erzielten antimikrobiellen Wirkungen zeigt die folgende Tabelle:

| Material | Dosierung der Formulierung | Test JIS Z 2801 (Staphylococcus aureus) Log-Reduktion⁽¹⁾ | Fungizide Wirkung EN ISO 846A⁽²⁾ |
|---|---|---|---|
| PVC | 0 % | 0,3 | 3 |
| PVC | 0.4 % | 3,9 | 0 |
| PU 1 | 0 % | 0,4 | 2 |
| PU 1 | 0,5 % | 4,1 | 0 |
| PU 2 | 0 % | 0 | 3 |
| PU 2 | 0,5 % | 4,7 | 0 |

PU1 und PU2 sind folgende zwei verschiedene, handelsübliche PU-Beschichtungssysteme.

### (1) Bakterizide Wirkung Test JIS Z 2801 (Staphylococcus aureus)

Eine log-Reduktion von >1 bedeutet eine Reduktion von >90% und bedeutet eine sehr gute Keimreduktion.

### (2) Fungizide Wirkung nach EN ISO 846A:

- 0:: Kein Wachstum: Das Muster zeigt eine exzellente Schimmelpilzresistenz.
- 1:: Schimmel ist lediglich unter dem Mikroskop sichtbar: Das Muster zeigt eine ausreichende Schimmelpilzresistenz.
- 2-5:: Schimmel ist mit dem blossen Auge sichtbar: Das Muster zeigt ungenügende Schimmelpilzresistenz.

### Beispiel 4 Herstellung eines Polyurethan-Lackes

### a) Einkomponentenlack:

0,6 g der in Beispiel 1 hergestellten, antibaktieriellen Formulierung wurden in 99,4 g des PU-Einkomponentenlack DD (Produkt der Firma Rupf & Co AG, CH-8152 Glattbrugg) eingerührt. Nach dem Auftragen wurde die Beschichtung nach Herstellervorschrift für 72 h trocknen gelassen. Man erhielt eine farblose transparente Beschichtung.

### b) Zweikomponentenlack:

0,8 g der in Beispiel 1 hergestellten, antibaktieriellen Formulierung wurden in 99,2 g des handelsüblichen PU-Lacks (RUCOPUR 2K, Produkt der Firma Rupf & Co AG, CH-8152 Glattbrugg) eingerührt. Anschliessend wurde nach Herstellervorschrift im Verhältnis 3:1 der handelsübliche Härter "DD-Härter 5000" zudosiert und 72 Stunden aushärten gelassen. Man erhielt eine farblose transparente Beschichtung.

Die Keimreduktion in PU-Lack-Systemen wird in nachfolgender Tabelle gezeigt.

| Lack | | Formulierung aus Beispiel 1 | |
|---|---|---|---|
| Einkomponentenlack DD farblos | Einsatzkonzentration | 0.6% | 1.0% |
| | Keimreduktion, log | 1.53 ! | 2.1 |
| | | | |
| Rucopur Klarlack/Härter 3:1 | Einsatzkonzentration | 0.8% | 1% |
| | Keimreduktion, log | 3.03 | 4.68 |

Eine Keimreduktion um 1 log-Einheit (90%) wird als sehr gut bewertet.

### Beispiel 5 Vergleiche mit anderen Formulierungen

Zum Vergleich wurden neben den erfindungsgemäßen Formulierungen auch Formulierungen hergestellt, die statt der Komponente Hexylenglykol die Komponente Polyethylenglykol enthielten. Auch wurden Formulierungen hergestellt, die statt der antimikrobiellen Komponente NaPT die Komponente Zinkpyrithion enthielten.

Die Testung erfolgte nach der Norm JIS Z 2801 (Staphylococcus aureus). Eine logreduction von>1 bedeutet eine Reduktion von >90% und bedeutet eine sehr gute Keimreduktion.

| NaPT | ZnPT | BIT | Hexylenglykol | Polyethylenglyk ol | Aspekt der Formulierung | Anteil Formulierung in Beschichtung | Beschichtung nach Thermischem Belastungstest (14 Tage 210° C) | Keim reduktion (log)* |
|---|---|---|---|---|---|---|---|---|
| 10g | | 10 g | 80 g | | Klare gelbliche Lösung | 0,4% in PVC-Beschichtung | Farblose, klare Beschichtung | 3,9 |
| 10g | | 10g | 80 g | | Klare gelbliche Lösung | 0,5% in PU-Beschichtung | Farblose, klare Beschichtung | 4,1 |
| 10g | | 10g | | 10g | Gelbliche Lösung | 0,4% in PVC-Beschichtung | Klare, gelbliche Beschichtung | 2,6 |
| 10g | | 10g | | 10g | Gelbliche Lösung | 0,5% in PU-Beschichtung | Klare, gelbliche Beschichtung | 2,6 |
| | 10g | 10 g | 10g | | Gelbliche trübe Dispersion | 0,4% in PVC-Beschichtung | Starktrübe, gelbliche Beschichtung | - |
| | 10g | 10g | 10g | | Gelbliche trübe Dispersion | 0,5% in PU-Beschichtung | Starktrübe, gelbliche Beschichtung | - |
| | 10g | 10g | | 10g | Gelbliche trübe Dispersion | 0,4% in PVC-Beschichtung | Starktrübe, gelbe Beschichtung | - |
| | 10g | 10g | | 10 g | Gelbliche trübe Dispersion | 0,5% in PU-Beschichtung | Starktrübe, gelbe Beschichtung | - |

Die Formulierungen mit dem Wirkstoff Zinkpyrithion statt Natriumpyrithion waren trübe und nicht lagerstabil (insbesondere Sedimentation von Zinkpyrithion). Beim Applizieren in PU- oder PVC-Beschichtungen ergaben sich trübe Filme, die sich bei einem thermischen Belastungstest (14 Tage, 210° C) zudem gelblich verfärbten.

Eine gelbliche Verfärbung ergibt sich auch beim Einsatz von Formulierungen mit NaPT und BIT in Verbindung mit verschiedenen anderen Glykolen, wie beispielsweise Ethylenglykol oder Polyethylenglykol als Lösungsmittel.

Durch den Einsatz von Formulierungen mit NaPT und BIT unter Verwendung von Hexylenglykol als Lösungsmittel konnte diese Verfärbung überraschenderweise auch nach einem thermischen Belastungstest verhindert werden. Die Formulierungen sind bei Temperaturen von 20° C auch über einen Zeitraum von mehr als 180 Tagen lagerstabil. Selbst bei einem Belastungstest mit einer erhöhten Lagerungstemperatur von 54 °C erwiesen sich die Formulierungen über mehr als 14 Tage stabil, ohne dass Beeinträchtigungen festgestellt werden konnten.

## Patentansprüche

1. Formulierung zur antimikrobiellen Ausrüstung von Polymermaterialien, die als antimikrobielle Wirkstoffe 1 bis 30 Gew.-%, bezogen auf die gesamte Formulierung Natriumpyrithion (NaPT) und 1 bis 30 Gew.-%, bezogen auf die gesamte Formulierung 1,2-Benzisothiazolin-3-on (BIT), sowie als zusätzliche Komponente 20 bis 80 Gew.-%, bezogen auf die gesamte Formulierung Hexylenglykol (HG) enthält.

2. Formulierung gemäß Anspruch 1, **dadurch gekennzeichnet, dass** sie als antimikrobielle Wirkstoffe nur Natriumpyrithion (NaPT) und 1,2-Benzisothiazolin-3-on (BIT) sowie als zusätzliche Komponente Hexylenglykol (HG) sowie als ein weiteres Lösungsmittel (L) Wasser enthält.

3. Formulierung gemäß einem der Ansprüche 1 oder 2, **dadurch gekennzeichnet, dass** sie das Natriumpyrithion (NaPT) in einer Menge von 5 bis 20 Gew.-%, bezogen auf die gesamte Formulierung, enthält.

4. Formulierung gemäß einem der Ansprüche 1 bis 3, **dadurch gekennzeichnet, dass** sie das 1,2-Benzisothiazolin-3-on (BIT) in einer Konzentration von 5 bis 20 Gew.-%, bezogen auf die gesamte Formulierung, enthält.

5. Formulierung gemäß einem der Ansprüche 1 bis 4, **dadurch gekennzeichnet, dass** sie das Natriumpyrithion (NaPT) einerseits und das 1,2-Benzisothiazolin-3-on (BIT) andererseits in einem synergistischen Gewichtsverhältnis im Bereich von 1 zu 5 bis 5 zu 1 enthält.

6. Formulierung gemäß einem der Ansprüche 1 bis 5, **dadurch gekennzeichnet, dass** sie das Hexylenglykol (HG) in einer Konzentration von 30 bis 70 Gew.-%, bezogen auf die gesamte Formulierung, enthält.

7. Formulierung gemäß einem der Ansprüche 1 bis 6, **dadurch gekennzeichnet, dass** sie die beiden antimikrobiellen Komponenten in einer Gesamtkonzentration von 2 bis 30 Gew.-%, bezogen auf die gesamte Formulierung, und das Hexylenglykol (HG) in einer Konzentration von 30 bis 70 Gew.-%, bezogen auf die gesamte Formulierung, enthält.

8. Formulierung gemäß einem der Ansprüche 1 bis 7, **dadurch gekennzeichnet, dass** sie 10 bis 60 Gew.-%, bezogen auf die gesamte Formulierung, mindestens eines weiteren Lösungsmittels (L) enthält.

9. Formulierung gemäß einem der Ansprüche 1 bis 8, **dadurch gekennzeichnet, dass** sie 0,5 bis 10 Gew.-%, bezogen auf die gesamte Formulierung, an Zusatzstoffen enthält.

10. Verfahren zur Herstellung einer antimikrobiellen Formulierung gemäß einem der Ansprüche 1 bis 9 bei dem man die antimikrobiellen Wirkstoffe Natriumpyrithion (NaPT) und 1,2-Benzisothiazolin-3-on (BIT), sowie das Hexylenglykol (HG) und optional die weiteren Komponenten vermischt.

11. Verwendung einer antimikrobiellen Formulierung nach einem der Ansprüche 1 bis 9 zur Bekämpfung von schädlichen Mikroorganismen in Polymermaterialien.

12. Verwendung nach Anspruch 11, **dadurch gekennzeichnet, dass** die antimikrobielle Formulierung zum Konservieren von Polymermaterialien, ausgewählt aus Beschichtungen und Lacken aus Polyurethanen, PVC, Polyestern und/oder Polyacrylaten eingesetzt wird.

13. Gegen schädliche Mikroorganismen konservierte Polymermaterialien **gekennzeichnet durch** einen Gehalt an einer antimikrobiellen Formulierung nach einem der Ansprüche 1 bis 9, wobei die Einsatzkonzentration der antimikrobiellen Formulierung in den Polymermaterialien von 0,01 bis 10 Gew.-% beträgt.

14. Gegen schädliche Mikroorganismen konservierte Polymermaterialien, nach Anspruch 13, die auf Polyurethanen, PVC, Polyestern und/oder Polyacrylaten, basieren und die 0,05 bis 10 Gew.-% der antimikrobiellen Formulierung bezogen auf die gesamte Beschichtungsmasse bzw. den Lack, enthalten.

15. Gegen schädliche Mikroorganismen konservierte Polymermaterialien nach Anspruch 13, die ausgewählt sind aus Beschichtungsmassen und Lacken, und die auf Polyurethanen oder PVC basieren, und die von 0,1 bis 3 Gew.-% der antimikrobiellen Formulierung, bezogen auf die gesamte Beschichtungsmasse bzw. den Lack, enthalten.

## Claims

1. Formulation for the antimicrobial treatment of polymeric materials which comprises, as antimicrobial active ingredients, 1 to 30% by weight, based on the total formulation, of sodium pyrithione (NaPT) and 1 to 30% by weight, based on the total formulation, of 1,2-benzisothiazolin-3-one (BIT) and, as additional component, 20 to 80% by weight, based on the total formulation, of hexylene glycol (HG).

2. Formulation according to Claim 1, **characterized in that** it comprises, as antimicrobial active ingredients, only sodium pyrithione (NaPT) and 1,2-benzisothiazolin-3-one (BIT) and, as additional component, hexylene glycol (HG) and, as a further solvent (L), water.

3. Formulation according to one of Claims 1 or 2, **characterized in that** it comprises the sodium pyrithione (NaPT) in an amount of from 5 to 20% by weight, based on the total formulation.

4. Formulation according to one of Claims 1 to 3, **characterized in that** it comprises 1,2-benzisothiazolin-3-one (BIT) in a concentration of from 5 to 20% by weight, based on the total formulation.

5. Formulation according to one of Claims 1 to 4, **characterized in that** it comprises the sodium pyrithione (NaPT) on the one hand and the 1,2-benzisothiazolin-3-one (BIT) on the other hand in a synergistic weight ratio in the range from 1:5 to 5:1.

6. Formulation according to one of Claims 1 to 5, **characterized in that** it comprises the hexylene glycol (HG) in a concentration of from 30 to 70% by weight, based on the total formulation.

7. Formulation according to one of Claims 1 to 6, **characterized in that** it comprises the two antimicrobial components in a total concentration of from 2 to 30% by weight, based on the total formulation, and the hexylene glycol (HG) in a concentration of from 30 to 70% by weight, based on the total formulation.

8. Formulation according to one of Claims 1 to 7, **characterized in that** it comprises 10 to 60% by weight, based on the total formulation, of at least one further solvent (L).

9. Formulation according to one of Claims 1 to 8, **characterized in that** it comprises 0.5 to 10% by weight, based on the total formulation, of additives.

10. Process for the preparation of an antimicrobial formulation according to one of Claims 1 to 9, in which the antimicrobial active ingredient sodium pyrithione (NaPT) and 1,2-benzisothiazolin-3-one (BIT), and the hexylene glycol (HG) and optionally the further components are mixed.

11. Use of an antimicrobial formulation according to one of Claims 1 to 9 for controlling harmful microorganisms in polymeric materials.

12. Use according to Claim 11, **characterized in that** the antimicrobial formulation is used for preserving polymeric materials, selected from coatings and paints made from polyurethanes, PVC, polyesters and/or polyacrylates.

13. Polymeric materials preserved against harmful microorganisms, **characterized by** a content of an antimicrobial formulation according to one of Claims 1 to 9, where the use concentration of the antimicrobial formulation in the polymeric materials is from 0.01 to 10% by weight.

14. Polymeric materials preserved against harmful microorganisms according to Claim 13, which are based on polyurethanes, PVC, polyesters and/or polyacrylates, and which comprise 0.05 to 10% by weight of the antimicrobial formulation, based on the total coating mass or the paint.

15. Polymeric materials preserved against harmful microorganisms according to Claim 13, which are selected from coating masses and paints and which are based on polyurethanes or PVC and which comprise from 0.1 to 3% by weight of the antimicrobial formulation, based on the total coating mass or the paint.

## Revendications

1. Composition destinée au traitement antimicrobien de matériaux polymères, qui contient en tant que substances actives antimicrobiennes 1 à 30 % en poids, par rapport à la composition totale, de pyrithione de sodium (NaPT) et 1 à 30 % en poids, par rapport à la composition totale, de 1,2-benzisothiazolin-3-one (BIT), ainsi que comme composant supplémentaire 20 à 80 % en poids, par rapport à la composition totale, d'hexylèneglycol (HG).

2. Composition selon la revendication 1, **caractérisée en ce qu'**elle contient en tant que substances actives antimicrobiennes seulement de la pyrithione de sodium (NaPT) et de la 1,2-benzisothiazolin-3-one (BIT) ainsi que comme composant supplémentaire de l'hexylèneglycol (HG) ainsi qu'en tant qu'autre solvant (S) de l'eau.

3. Composition selon l'une quelconque des revendications 1 et 2, **caractérisée en ce qu'**elle contient la pyrithione de sodium (NaPT) en une quantité de 5 à 20 % en poids, par rapport à la composition totale.

4. Composition selon l'une quelconque des revendications 1 à 3, **caractérisée en ce qu'**elle contient la 1,2-benzisothiazolin-3-one (BIT) à une concentration de 5 à 20 % en poids, par rapport à la composition totale.

5. Composition selon l'une quelconque des revendications 1 à 4, **caractérisée en ce qu'**elle contient la pyrithione de sodium (NaPT) d'une part et la 1,2-benzisothiazolin-3-one (BIT) d'autre part en un rapport pondéral synergique dans la plage de 1:5 à 5:1.

6. Composition selon l'une quelconque des revendications 1 à 5, **caractérisée en ce qu'**elle contient l'hexylèneglycol (HG) à une concentration de 30 à 70 % en poids, par rapport à la composition totale.

7. Composition selon l'une quelconque des revendications 1 à 6, **caractérisée en ce qu'**elle contient les deux composants antimicrobiens à une concentration totale de 2 à 30 % en poids, par rapport à la composition totale, et l'hexylèneglycol (HG) à une concentration de 30 à 70 % en poids, par rapport à la composition totale.

8. Composition selon l'une quelconque des revendications 1 à 7, **caractérisée en ce qu'**elle contient 10 à 60 % en poids, par rapport à la composition totale, d'au moins un autre solvant (S).

9. Composition selon l'une quelconque des revendications 1 à 8, **caractérisée en ce qu'**elle contient 0,5 à 10 % en poids, par rapport à la composition totale, d'additifs.

10. Procédé pour la préparation d'une composition antimicrobienne selon l'une quelconque des revendications 1 à 9, dans lequel on mélange les substances actives antimicrobiennes pyrithione de sodium (NaPT) et 1,2-benzisothiazolin-3-one (BIT), ainsi que l'hexylèneglycol (HG) et en option les autres composants.

11. Utilisation d'une composition antimicrobienne selon l'une quelconque des revendications 1 à 9, pour la lutte contre des micro-organismes nuisibles dans des matériaux polymères.

12. Utilisation selon la revendication 11, **caractérisée en ce qu'**on utilise la composition antimicrobienne pour la conservation de matériaux polymères, choisis parmi des revêtements et des peintures à base de polyuréthanes, PVC, polyesters et/ou polyacrylates.

13. Matériaux polymères conservés en étant protégés contre des micro-organismes nuisibles, **caractérisés par** une teneur en une composition antimicrobienne selon l'une quelconque des revendications 1 à 9, la concentration utilisée de la composition antimicrobienne dans les matériaux polymères valant de 0,01 à 10 % en poids.

14. Matériaux polymères conservés en étant protégés contre des micro-organismes nuisibles selon la revendication 13, qui sont à base de polyuréthanes, PVC, polyesters et/ou polyacrylates et qui contiennent 0,05 à 10 % en poids de la composition antimicrobienne, par rapport à la matière de revêtement ou à la peinture totale.

15. Matériaux polymères conservés en étant protégés contre des micro-organismes nuisibles selon la revendication 13, qui sont choisis parmi des matières de revêtement et des peintures, et qui sont à base de polyuréthane ou de PVC, et qui contiennent de 0,1 à 3 % en poids de la composition antimicrobienne, par rapport à la matière de revêtement ou la peinture totale.
